# EUROPÄISCHE PATENTSCHRIFT

(11) **EP 2 210 755 B1**
(45) Veröffentlichungstag und Bekanntmachung des Hinweises auf die Patenterteilung: **13.03.2013**
(21) Anmeldenummer: 09014939.4
(22) Anmeldetag: 02.12.2009
(51) Int. Cl.: B60J 7/12

(54) **Zusammenlegbares Dach für einen Personenkraftwagen**
Folding roof for a passenger vehicle
Toit repliable pour un véhicule de transport de passagers

(30) Priorität: 23.01.2009 DE 102009005934
(43) Veröffentlichungstag der Anmeldung: 28.07.2010
(73) Patentinhaber: AUDI AG, 85045 Ingolstadt (DE)
(72) Erfinder: Just, Jan, Bloomfield Hills, MI 48301 (US)
(74) Vertreter: Engelhardt, Harald

(56) Entgegenhaltungen:
- EP-A2- 0 949 101
- WO-A1-03/084773
- DE-A1-102004 054 160

## Beschreibung

Die Erfindung bezieht sich auf ein zusammenlegbares Dach für einen Personenkraftwagen, das mittels eines ein Hauptlager umfassenden Betätigungsgestänges zwischen einer Schließstellung und einer Offenstellung bewegbar ist, nach dem Oberbegriff des Patentanspruchs 1.

Es ist ein Hardtop-Fahrzeug mit einem beweglichen Dach bekannt, DE 44 45 580 C1, das ein vorderes Dachteil und ein hinteres Dachteil umfasst. Das vordere Dachteil ist unter Zwischenschaltung eines zwei Lenker aufweisenden, ein Viergelenkgetriebe bildenden Gestängesystems zwischen einer Schließstellung und einer Offenstellung bewegbar. Beide Lenker sind einerseits am vorderen Dachteil und andererseits an einem am Aufbau befestigten Hauptlager angelenkt. Das Hauptlager weist einen U-förmigen Querschnitt mit aufrechten Schenkeln auf, die mit Lagern für Vorrichtungen eines Dachgestänges versehen sind.

Aus der DE 44 41 666 C1 geht ein Faltverdeck für ein Fahrzeug hervor, welches Faltverdeck einen Verdeckabschnitt besitzt, der mittels eines B-Säulenlenkers und eines Hauptlenkers, die Bestandteil eines Viergelenksystems sind, an einem Verdeckgestänge angelenkt ist. Das Verdecklager ist winkelförmig ausgeführt und mit einem aufrechten Steg sowie einem horizontalen Steg versehen. Am aufrechten Steg sind Lager für Lenker eines Faltgestänges eines Betätigungsgestänges des Faltverdecks vorgesehen.

Die DE 10 2005 045 213 A1 gibt Hauptlager für ein Verdeckgestänge eines Faltverdecks wieder, die für den Einbau in einen Personenkraftwagen konstruiert sind. Jedes pro Längsseite des Personenkraftwagens angeordnete Hauptlager ist mit Lagern für Lenkerelemente eines Verdeckgestänges ausgebildet.

Ein gattungsgemäßes Dach ist beispielsweise aus der DE 10 2004 054 160 A1 bekannt und ist mittels eines ein Hauptlager umfassenden Betätigungsgestänges zwischen einer Schließstellung und einer Offenstellung bewegbar, wobei am Hauptlager zumindest ein Lenker des Betätigungsgestänges unter Zwischenschaltung eines Lagers angelenkt ist, wobei ferner das Hauptlager zwei zusammengesetzte Lagerplatten aufweist, die zumindest bereichsweise mit parallelem, einen Hohlraum begrenzenden Abstand zueinander verlaufen sowie sich wenigstens an einem Verbindungsabschnitt gegenseitig abstützen. Beim bekannten Dach sind zwei Verbindungsabschnitte vorgesehen, die jeweils als parallel zur Abstandsrichtung verlaufende Wände ausgestaltet sind, die an die beiden Lagerplatten angebaut sind.

Es ist Aufgabe der Erfindung, ein zusammenlegbares Dach für einen Personenkraftwagen zu schaffen, bei dem ein Hauptlager für ein Betätigungsgestänge zum Verstellen des Dachs so ausgestaltet ist, dass es sich durch einfache Bauweise bei definiert hoher Aufnahme von Kräften des Verdeckgestänges auszeichnet. Dabei sollte aber auch sichergestellt werden, dass das Hauptlager relativ aufwandsarm herstellbar ist und einen Beitrag zur Gewichtsreduktion leistet.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass das Hauptlager aus zwei leicht herstellbaren Trägerplatten besteht und aufgrund seiner Ausbildung und Zusammensetzung einen Maßstäbe setzenden Rahmenverbund darstellt, der über eine hohe Festigkeit verfügt. Hierzu tragen auch die durch Ausformungen gebildeten Verbindungsabschnitte an beiden Trägerplatten bei, die mit geringem Raumanspruch zwischen den Trägerplatten angeordnet sind. Beide Trägerplatten -bzw. das Hauptlager- sind dadurch bezüglich Gewicht optimierbar, dass sie aus geeignetem Kunststoff oder Metall, namentlich Leichtmetall und hier aus einer Magnesium-Legierung, hergestellt sind. Darüber hinaus sind wesentliche Flächenbereiche der Lagerplatten mit Verrippungen versehen, wodurch besagte Lagerplatte bzw. das Hauptlager zusätzlich versteift werden. Ähnliches wird erreicht, wenn Mantelflächen der eine kreiszylinderische Form aufweisenden Verbindungsabschnitte durch Knotenstege abgestützt sind. Schließlich wird ein funktionsgerechtes Ausrichten des Hauptlagers erreicht, wenn an den Trägerplatten Stützeinrichtungen vorgesehen sind, die mit korrespondierenden Stützzapfen am Aufbau zusammenwirken.

In der Zeichnung wird ein Ausführungsbeispiel der Erfindung gezeigt, das nachstehend näher beschrieben wird.

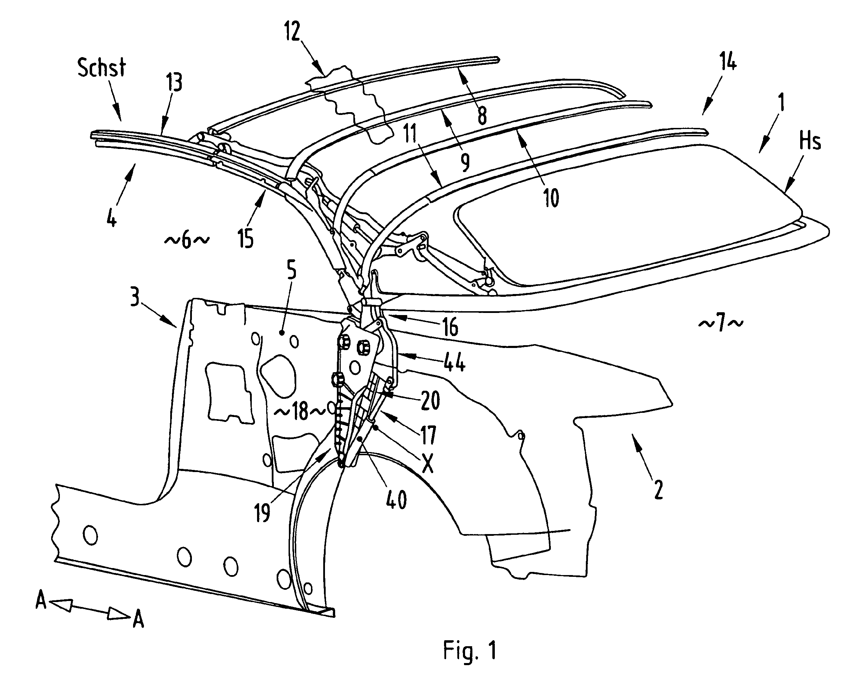

Es zeigen
Fig. 1 eine Teilschrägansicht von hinten links auf einen Personenkraftwagen mit einem zusammenlegbaren Dach eines Personenkraftwagens nach der Erfindung,
Fig. 2 eine Einzelheit X der Fig. 1 mit einem Hauptlager des zusammenlegbaren Dachs als Explosionsdarstellung in größerem Maßstab,
Fig. 3 eine Ansicht in Pfeilrichtung Y der Fig. 2,
Fig. 4 eine Ansicht Pfeilrichtung Z der Fig. 3,
Fig. 5 eine Schrägansicht von hinten links auf das Hauptlager gemäß den Fig. 1 und 2,
Fig. 6 eine Explosionsdarstellung der Fig. 5,

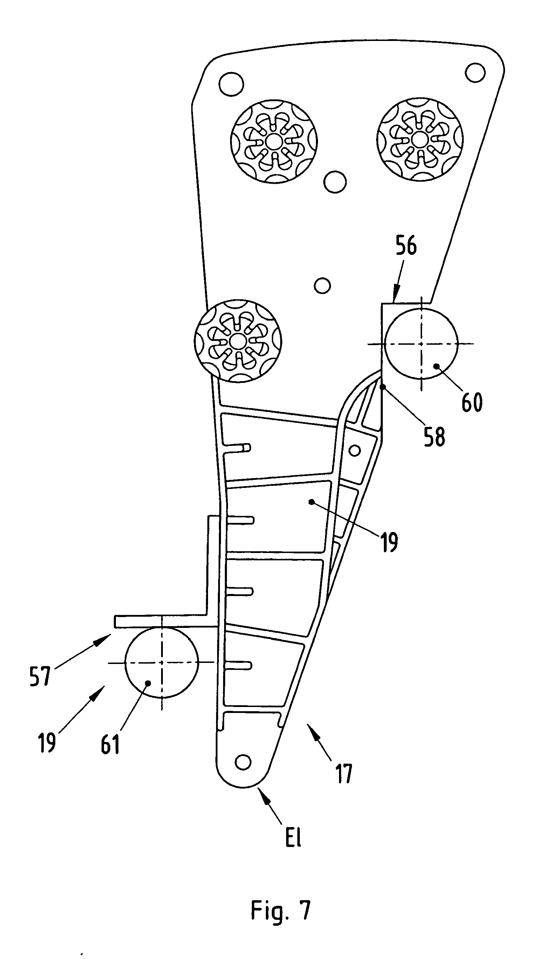

Fig. 7 eine schematische Seitenansicht des Hautlagers mit einer Stützeinrichtung und einem Stützzapfen.

Ein Personenkraftwagen 1 weist einen Aufbau 2 mit einem Grundkörper 3 und einem Dach 4 auf. Der eine Wandstruktur 5, bspw. aus Metallblech, besitzende Grundkörper 3 trägt des Dach 4, das zusammenlegbar ist und von einer einen Fahrgastraum 6 umspannenden Schließstellung Schst in eine in einem Aufbewahrungsraum 7 abgesenkte Offenstellung -nicht gezeigt- bewegbar ist. Das Dach 4 ist mit quer zur Fahrzeuglängsrichtung A-A verlaufenden Spriegeln 8, 9, 10 und 11 versehen, die zumindest in der Schließstellung Schst des Dachs 4 einen Verdeckbezug 12 stützen und mit an Längsseiten 13 und 14 des besagten Dachs 4 verlaufenden Lenkersystemen 15 eines Betätigungsgestänges 16 zusammenwirken. Der Spriegel 11 begrenzt einen oberen Rand einer Heckscheibe Hs. Das Betätigungsgestänge 16 umfasst Hauptlager 17, die an gegenüberliegenden Wänden 18 der Wandstruktur 5, also benachbart der Längsseiten 13 und 14, angeordnet sind.

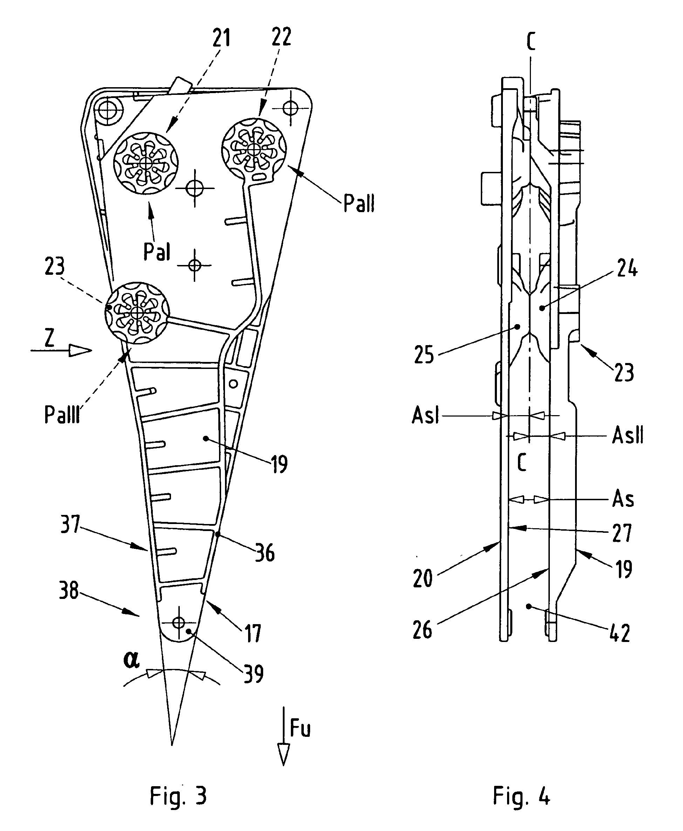

Jedes Hauptlager 17 setzt sich aus zwei zusammengebauten Lagerplatten 19 und 20 zusammen, die zumindest bereichsweise mit parallelem Abstand As verlaufen, sich jedoch an einem oder mehreren Verbindungsabschnitten 21, 22 und 23 gegenseitig abstützen. Im Ausführungsbeispiel wird jeder Verbindungsabschnitt -z.B. 23- durch Ausformungen 24 und 25 -Fig. 3 und 4- beider Lagerplatten 19 und 22 gebildet, die in einer gemeinsamen Verbindungsebene C-C zusammengeführt sind. Die Verbindungsebene C-C verläuft mit gleichem Abstand Asl = Asll zu einander zugekehrten ebenen Flächen 26 und 27 der Lagerplatten 19 und 20.

Die Lagerplatten 19 und 20 sind flächige Bauteile, in die die Ausformungen 24 und 25 der Verbindungsabschnitte 21, 22 und 23 integriert sind. Als Werkstoff für die Lagerplatten 19 und 20 eigenen sich Kunststoff oder Metall; im Falle von Metall bietet sich Leichtmetall, insbesondere eine Magnesiumlegierung an. Zur Erhöhung der Festigkeit der Lagerplatten 19 und 20 sind über definierte Flächenbereiche 27 und 28 Verrippungen 29 und 30 vorgesehen, die bspw. nach Art von Gitterverstrebungen ausgeführt sein können.

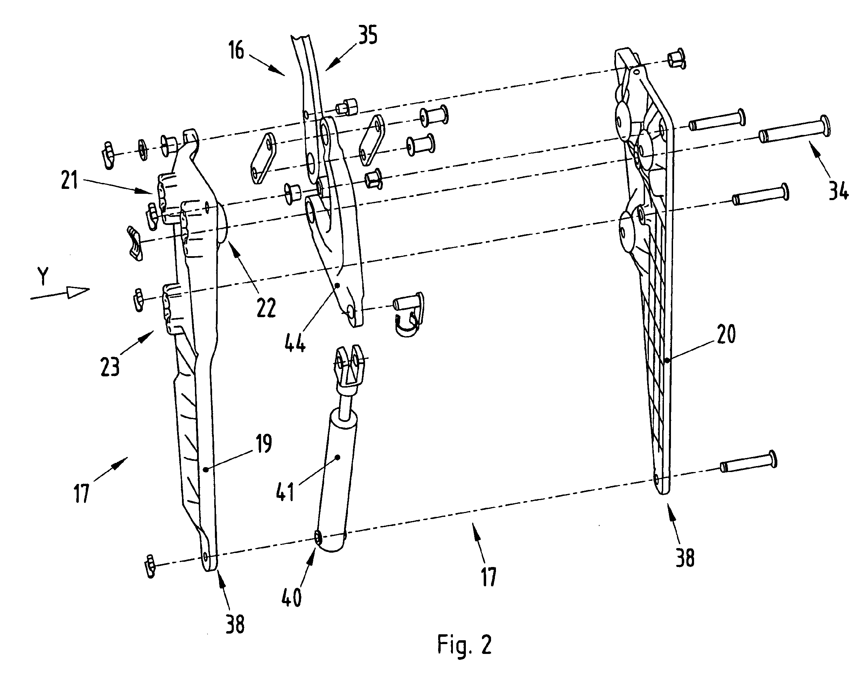

Die Verbindungsabschnitte 21, 22 und 23 zwischen den Lagerplatten 19 und 20 bilden zur Vermeidung einer statischen Überbestimmung eine Art Dreipunktabstützung Pal, Pall und Pall -Fig.3. Dabei weist jeder Verbindungsabschnitt -z.B. 23- die Form eines kreisförmigen Zylinders 31 auf, dessen Mantelfläche 32 gegenüber dem Flächenbereich 28 mit Knotenstegen 33 abgestützt ist. Darüber hinaus ist z.B. der Verbindungsabschnitt 22 zur Aufnahme eines Lagerbolzens 34 für einen Lenker 35 des Betätigungsgestänges 16 ausgebildet -Fig. 2.

Von der Seite gesehen weisen die Lagerplatten 19 und 20 eine etwa dreieckige Form auf, wobei sich zur Fahrzeugunterseite Fu hin verjüngende Begrenzungsseiten 36 und 37 einen spitzen Winkel α einschließen. An ihrem unteren Endbereich 3 der Lagerplatten 19 und 20 ist ein Lager 39 für ein erstes Ende 40 eines Betätigungszylinders 41 vorgesehen, der sich innerhalb eines Hohlraums 42, gebildet durch die beabstandeten Lagerplatten 19 und 20, erstreckt. Ein zweites Ende 43 des Betätigungszylinders 41 wirkt mit einem Antriebshebel 44 des Betätigungsgestänges 16 zusammen, welcher Antriebshebel 44 am Hauptlager 17 beweglich angeordnet ist.

Die Begrenzungsseiten 36 und 37 wenigsten einer Lagerplatte -z.B. 19- sind auf der vom Hohlraum 42 abgekehrten Seite 45 mit Abwinkelungen 46 und 47 versehen.

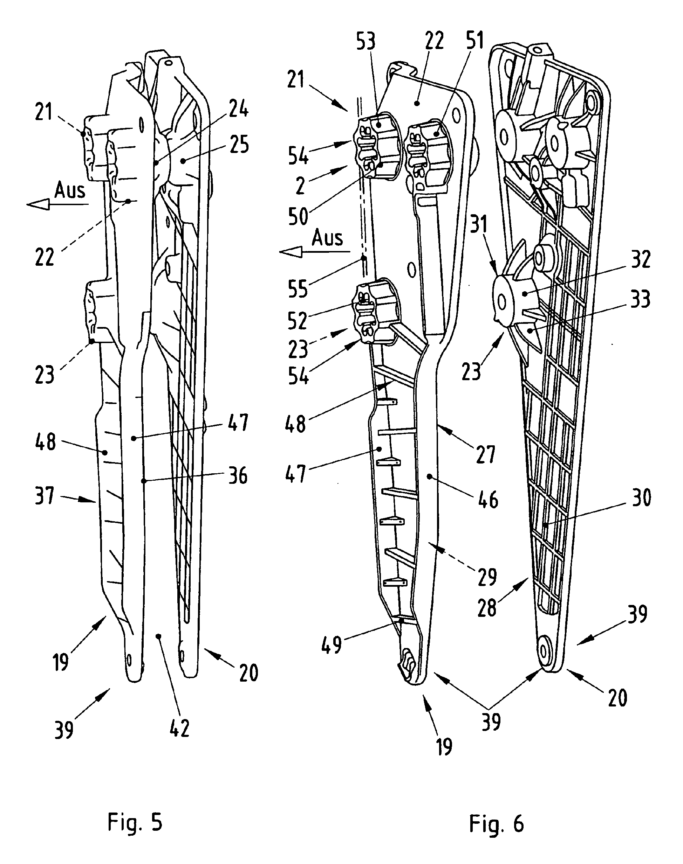

Diese Abwinkelungen 46 und 47 sind durch Verbindungsstege 48 und Knotenstege 49 abgestützt. Gemäß Fig. 6 ist die Lagerplatte 19 im Bereich der Verbindungsabschnitte 21, 22 und 23 mit zur Außenseite Aus hin gerichteten Verlängerungen 50, 51 und 52 versehen, die bspw. mit ringförmigen Verzahnungen 53 versehen sind. Freie Enden 54 der Verlängerungen (51, 52 und 53) liegen an einem Wandabschnitt 55 der Wandstruktur 5 des Aufbaus 2 an.

An den Begrenzungsseiten 36 und 37 der Lagerplatten 19 und 20 sind nach Art von Ausnehmungen 56 oder Anschlägen 57 ausgebildete Stützeinrichtungen 58 und 59 eingearbeitet, die mit festen Stützzapfen 60 und 61 des Aufbaus 2 zusammenwirken. Das Hauptlager 17 wird von oben zwischen den Stützzapfen 60 und 61 in seine vorgesehene Endlage El eingeführt.

## Patentansprüche

1. Zusammenlegbares Dach für einen Personenkraftwagen, das mittels eines ein Hauptlager (17) umfassenden Betätigungsgestänges (16) zwischen einer Schließstellung (Schst) und einer Offenstellung bewegbar ist, wobei am Hauptlager (17) zumindest ein Lenker (35) des Betätigungsgestänges (16) unter Zwischenschaltung eines Lagers angelenkt ist, wobei das Hauptlager (17) zwei zusammengesetzte Lagerplatten (19 und 20) aufweist, die zumindest bereichsweise mit parallelem einen Hohlraum (42) begrenzenden Abstand (As) zueinander verlaufen sowie sich wenigstens an einem Verbindungsabschnitt (21, 22 und 23) gegenseitig abstützen, **dadurch gekennzeichnet, dass** mehrere Verbindungsabschnitte (21, 22 und 23) vorgesehen sind, die durch Ausformungen (24 und 25) wenigstens einer Lagerplatte (19 und 20) gebildet sind.

2. Zusammenlegbares Dach nach Anspruch 1, **dadurch gekennzeichnet, dass** jede Lagerplatte (19 und 21) Ausformungen (24 und 25) besitzt, die in einer gemeinsamen Verbindungsebene (C-C) zusammengesetzt sind.

3. Zusammenlegbares Dach nach einem oder mehreren der vorangehenden Ansprüche, **dadurch gekennzeichnet, dass** die Lagerplatten (19 und 21) flächige Bauteile sind, in die die Ausformungen (25 und 25) integriert sind.

4. Zusammenlegbares Dach nach einem oder mehreren der vorangehenden Ansprüche, **dadurch gekennzeichnet, dass** die Lagerplatten (19 und 20) aus Kunststoff, Metall oder dgl. bestehen.

5. Zusammenlegbares Dach nach Anspruch 4, **dadurch gekennzeichnet, dass** die Lagerplatten (19 und 20) aus Leichtmetall, vorzugsweise einer Magnesiumlegierung bestehen.

6. Zusammenlegbares Dach nach den Ansprüchen 3 bis 5, **dadurch gekennzeichnet, dass** jede Lagerplatte (19 und 20) über definierte Flächenbereiche (27 und 28) mit Verrippungen (29 und 30) zur Versteifung versehen ist.

7. Zusammenlegbares Dach nach einem oder mehreren der vorangehenden Ansprüche, **dadurch gekennzeichnet, dass** zwischen den Lagerplatten (19 und 20) die Verbindungsabschnitte (21, 22 und 23) nach Art einer Dreipunktabstützung (Pal, Pall und Palll) ausgebildet sind.

8. Zusammenlegbares Dach nach Anspruch 1, **dadurch gekennzeichnet, dass** jeder Verbindungsabschnitt (21, 22 und 23) die Form eines kreisförmigen Zylinders (31) aufweist, dessen Mantelfläche (32) gegenüber einem benachbarten Flächenbereich (z.B. 27) der zugehörigen Lagerplatte (19 oder 20) mit Knotenstegen (33) abgestützt ist.

9. Zusammenlegbares Dach nach einem oder mehreren der vorangehenden Ansprüche, **dadurch gekennzeichnet, dass** zumindest ein Teil der Verbindungsabschnitte (21, 22 und 23) zur Aufnahme von Lagerbolzen (34) für Lenker (35) des Betätigungsgestänges (16) ausgebildet sind.

10. Zusammenlegbares Dach nach einem oder mehreren der vorangehenden Ansprüche, **dadurch gekennzeichnet, dass** die Lagerplatten (19 und 20) von der Seite gesehen eine etwa dreieckige Form aufweisen, deren sich zur Fahrzeugunterseite (Fu) hin verjüngende Begrenzungsseiten (36 und 39) einen bspw. spitzen Winkel (α) einschließen.

11. Zusammenlegbares Dach nach Anspruch 10, **dadurch gekennzeichnet, dass** die Lagerplatten (19 und 20) an ihrem unteren Endbereich (38) ein Lager (3) für ein erstes Ende (40) eines Betätigungszylinders (41) umfassen, der sich innerhalb des Hohlraums (42) erstreckt.

12. Zusammenlegbares Dach nach Anspruch 1, **dadurch gekennzeichnet, dass** ein zweites Ende (43) des Betätigungszylinders (41) mit einem Antriebshebel (44) zusammenarbeitet, der bspw. am Hauptlager (17) gelagert ist.

13. Zusammenlegbares Dach nach Anspruch 10, **dadurch gekennzeichnet, dass** die Begrenzungsseiten (36 und 37) wenigstens einer Lagerplatte (19 oder 20) auf der vom Hohlraum (42) abgekehrten Seite (45) mit Abwinkelungen (46 und 47) versehen sind.

14. Zusammenlegbares Dach nach Anspruch 13, **dadurch gekennzeichnet, dass** die Abwinkelungen (46 und 47) durch Verbindungsstege (48), Knotenstege (49) oder dgl. abgestützt sind.

15. Zusammenlegbares Dach nach einem oder mehreren der vorangehenden Ansprüche, **dadurch gekennzeichnet, dass** zumindest eine der Lagerplatten (19 oder 20) im Bereich der Verbindungsabschnitte (21, 22 und 23) mit zur Außenseite (Aus) hin gerichteten Verlängerungen (50, 51 und 52) versehen ist., die z.B. mit ringförmigen Verzahnungen (53) versehen sind.

16. Zusammenlegbares Dach nach einem oder mehreren der vorangehenden Ansprüche, **dadurch gekennzeichnet, dass** an wenigstens einer Begrenzungsseite (36 oder 37) der Lagerplatte eine Stützeinrichtung (58 oder 59) für einen Stützzapfen (60 oder 61) vorgesehen ist.

17. Zusammenlegbares Dach nach Anspruch 16, **dadurch gekennzeichnet, dass** an beiden Begrenzungsseiten (36 oder 37) der Lagerplatten (19 und 21) Stützeinrichtungen (58 und 59) für Stützzapfen (60 und 61) des Aufbaus (2) vorgesehen sind.

## Claims

1. Folding roof for a passenger vehicle, which roof is movable between a closed position (Schst) and an open position by means of an actuating linkage (16) comprising a main bearing (17), at least one rod (35) of the actuating linkage (16) being articulated to the main bearing (17) with insertion of a bearing, the main bearing (17) comprising two assembled bearing plates (19 and 20) which extend, at least in regions, with parallel mutual spacing (As) defining a cavity (42), and are mutually supported at least on a connecting portion (21, 22 and 23), **characterised in that** a plurality of connecting portions (21, 22 and 23) are provided which are formed by mouldings (24 and 25) of at least one bearing plate (19 and 20).

2. Folding roof according to claim 1, **characterised in that** each bearing plate (19 and 21) has mouldings (24 and 25) which are assembled in a common connection plane (C-C).

3. Folding roof according to one or more of the preceding claims, **characterised in that** the bearing plates (19 and 21) are planar components in which the mouldings (25 and 25) are integrated.

4. Folding roof according to one or more of the preceding claims, **characterised in that** the bearing plates (19 and 20) consist of plastics material, metal or the like.

5. Folding roof according to claim 4, **characterised in that** the bearing plates (19 and 20) consist of light metal, preferably a magnesium alloy.

6. Folding roof according to claims 3 to 5, **characterised in that** each bearing plate (19 and 20) is provided with reinforcement ribs (29 and 30) over defined surface regions (27 and 28).

7. Folding roof according to one or more of the preceding claims, **characterised in that** between the bearing plates (19 and 20) the connecting portions (21, 22 and 23) are formed in the manner of a three-point support (Pal, Pall and Palll).

8. Folding roof according to claim 1, **characterised in that** each connecting portion (21, 22 and 23) has the shape of a circular cylinder (31), the outer surface (32) of which is supported opposite an adjacent surface region (e.g. 27) of the associated bearing plate (19 or 20) by node webs (33).

9. Folding roof according to one or more of the preceding claims, **characterised in that** at least some of the connecting portions (21, 22 and 23) are designed to receive bearing pins (34) for rods (35) of the actuating linkage (16).

10. Folding roof according to one or more of the preceding claims, **characterised in that** the bearing plates (19 and 20) have, when viewed from the side, an approximately triangular shape of which the boundary sides (36 and 39) which taper towards the underside of the vehicle (Fu) together form a, for example, acute angle (α).

11. Folding roof according to claim 10, **characterised in that** the bearing plates (19 and 20) comprise, at the lower end region (38) thereof, a bearing (3) for a first end (40) of an actuating cylinder (41) which extends inside the cavity (42).

12. Folding roof according to claim 1, **characterised in that** a second end (43) of the actuating cylinder (41) cooperates with a drive lever (44) which is mounted, for example, on the main bearing (17).

13. Folding roof according to claim 10, **characterised in that** the boundary sides (36 and 37) of at least one bearing plate (19 or 20) are provided with bent portions (46 and 47) on the side (45) facing away from the cavity (42).

14. Folding roof according to claim 13, **characterised in that** the bent portions (46 and 47) are supported by connecting webs (48), node webs (49) or the like.

15. Folding roof according to one or more of the preceding claims, **characterised in that** at least one of the bearing plates (19 or 20) is provided in the region of the connecting portions (21, 22 and 23) with extensions (50, 51 and 52) which are directed towards the outside (Aus) and are provided, for example, with ring-shaped gear teeth (53).

16. Folding roof according to one or more of the preceding claims, **characterised in that** a support device (58 or 59) for a support pin (60 or 61) is provided on at least one boundary side (36 or 37) of the bearing plate.

17. Folding roof according to claim 16, **characterised in that** support devices (58 and 59) for support pins (60 and 61) of the vehicle body (2) are provided on the two boundary sides (36 or 37) of the bearing plates (19 and 21).

## Revendications

1. Toit repliable pour véhicule de transport de passagers, qui peut être déplacé au moyen d'un mécanisme de commande (16) comprenant un palier principal (17) entre une position fermée (Schst) et une position ouverte, dans lequel au moins une bielle (35) du mécanisme de commande (16) est articulée sur le palier principal (17) en intercalant un palier, dans lequel le palier principal (17) présente deux plaques de palier composées (19 et 20), qui s'étendent l'une par rapport à l'autre au moins par zones à une distance (As) parallèle en délimitant un espace creux (42) et s'appuient également l'une contre l'autre au moins sur une section de liaison (21, 22 et 23) **caractérisé en ce qu'**il est prévu plusieurs sections de liaison (21, 22 et 23) qui sont formées par des renflements (24 et 25) d'au moins une plaque de palier (19 et 20).

2. Toit repliable selon la revendication 1, **caractérisé en ce que** chaque plaque de palier (19 et 21) possède des renflements (24 et 25) qui sont assemblés dans un plan de liaison commun (C-C).

3. Toit repliable selon une ou plusieurs des revendications précédentes, **caractérisé en ce que** les plaques de palier (19 et 21) sont des composants plats auxquels les renflements (25 et 25) sont intégrés.

4. Toit repliable selon une ou plusieurs des revendications précédentes, **caractérisé en ce que** les plaques de palier (19 et 20) sont constituées d'une matière plastique, d'un métal ou analogue.

5. Toit repliable selon la revendication 4, **caractérisé en ce que** les plaques de palier (19 et 20) sont constituées d'un métal léger, de préférence d'un alliage au magnésium.

6. Toit repliable selon les revendications 3 à 5, **caractérisé en ce que** chaque plaque de palier (19 et 20) est pourvue, sur des zones de surface définies (27 et 28), de nervures (29 et 30) destinées à un renforcement.

7. Toit repliable selon une ou plusieurs des revendications précédentes, **caractérisé en ce que**, entre les plaques de palier (19 et 20), les sections de liaison (21, 22 et 23) sont formées sur la base d'un appui en trois points (PaI, PaII et PaIII).

8. Toit repliable selon la revendication 1, **caractérisé en ce que** chaque section de liaison (21, 22 et 23) présente la forme d'un cylindre à base circulaire (31) dont la surface enveloppe (32) en regard d'une zone de surface adjacente (par exemple 27) de la plaque de palier correspondante (19 ou 20) est étayée par des moulures d'éclissage (33).

9. Toit repliable selon une ou plusieurs des revendications précédentes, **caractérisé en ce qu'**au moins une partie des sections de liaison (21, 22 et 23) est conformée pour recevoir des boulons de palier (34) pour la bielle (35) du mécanisme de commande (16).

10. Toit repliable selon une ou plusieurs des revendications précédentes, **caractérisé en ce que** les plaques de palier (19 et 20) présentent, en vue du côté, une forme approximativement triangulaire dont les côtés limitrophes (36 et 39) s'amincissant en direction de la partie inférieure (Fu) du véhicule incluent un angle (α), par exemple aigu.

11. Toit repliable selon la revendication 10, **caractérisé en ce que** les plaques de palier (19 et 20) comprennent, dans leur zone d'extrémité inférieure (38), un palier (3) pour une première extrémité (40) d'un cylindre de commande (41) qui s'étend à l'intérieur de l'espace creux (42).

12. Toit repliable selon la revendication 1, **caractérisé en ce qu'**une seconde extrémité (43) du cylindre de commande (41) coopère avec un levier d'entraînement (44), qui est monté par exemple sur le palier principal (17).

13. Toit repliable selon la revendication 10, **caractérisé en ce que** les côtés limitrophes (36 et 37) d'au moins une plaque de palier (19 ou 20) sont pourvus, du côté (45) opposé à l'espace creux (42), de replis (46 et 47).

14. Toit repliable selon la revendication 13, **caractérisé en ce que** les replis (46 et 47) sont étayés par des moulures de liaison (48), des moulures d'éclissage (49) ou analogues.

15. Toit repliable selon une ou plusieurs des revendications précédentes, **caractérisé en ce qu'**au moins une des plaques de palier (19 ou 20) est pourvue, dans la zone des sections de liaison (21, 22 et 23), de prolongements (50, 51 et 52) dirigés vers le côté externe (Aus) qui sont pourvus, par exemple, de dentures annulaires (53).

16. Toit repliable selon une ou plusieurs des revendications précédentes, **caractérisé en ce que**, sur au moins un côté limitrophe (36 ou 37) de la plaque de palier, il est prévu un dispositif d'appui (58 ou 59) pour un tourillon d'appui (60 ou 61).

17. Toit repliable selon la revendication 16, **caractérisé en ce qu'**il est prévu, des deux côtés limitrophes (36 ou 37) des plaques de palier (19 et 21), des dispositifs d'appui (58 et 59) pour des tourillons d'appui (60 et 61) de la carrosserie (2).
